# EUROPEAN PATENT APPLICATION

(11) **EP 4 190 841 A1**
(43) Date of publication of application: **07.06.2023**
(21) Application number: 21850036.1
(22) Date of filing: 24.05.2021
(51) Int. Cl.: C08J 3/12, H01M 4/13, H01M 4/139, H01M 4/36, H01M 4/62, H01G 11/38, H01G 11/86

(54) **PTFE POWDER, METHOD FOR PRODUCING ELECTRODE, AND ELECTRODE**

(30) Priority: 31.07.2020 JP 2020129882
(71) Applicant: PANASONIC INTELLECTUAL PROPERTY MANAGEMENT CO., LTD., Chuo-ku Osaka-shi Osaka 540-6207 (JP)
(72) Inventor: IZUMI Reiko, Chuo-ku, Osaka-shi, Osaka 540-6207 (JP); KATOU Daisuke, Chuo-ku, Osaka-shi, Osaka 540-6207 (JP); JIN Takuya, Chuo-ku, Osaka-shi, Osaka 540-6207 (JP); KONDO Shinichiro, Chuo-ku, Osaka-shi, Osaka 540-6207 (JP)
(74) Representative: Novagraaf International SA
(86) International application number: PCT/JP2021/019501
(87) International publication number: WO 2022/024520

(57) **Abstract**

Provided is a PTFE powder that is in a dry state, wherein the percentage of fibrous particles which have an aspect ratio of 1.5 or higher with respect to all particles is 20-60 %, and the average major axis size of the fibrous particles is 1-20 µm. A PTFE powder according to another embodiment of the present invention is in a dry state, wherein the percentage of fibrous particles which have an aspect ratio of 5 or higher with respect to all particles is 60 % or more, and the average minor axis size of the fibrous particles is 1-20 µm.

## Description

### TECHNICAL FIELD

The present disclosure relates to a PTFE powder, an electrode manufacturing method, and an electrode, and more particularly to a PTFE powder, an electrode manufacturing method, and an electrode that are suitable for non-aqueous electrolyte secondary batteries such as lithium ion batteries.

### BACKGROUND

Electrodes of a non-aqueous electrolyte secondary battery such as a lithium ion battery are generally produced by a wet process which involves applying an electrode mixture slurry containing an active material, a binder, and the like to a surface of a core which is a metal foil, and drying and compressing the applied coating. In that case, there is the problem that, during drying of the coating, migration or moving of the binder tends to occur. When binder migration occurs, the amount of the binder in the coating (i.e., the electrode mixture layer) toward the surface side becomes greater than that toward the core side, and an unevenness results in the distribution of the binder in the thickness direction of the electrode mixture layer.

In recent years, studies have been conducted on a dry process in which an electrode mixture sheet is produced by rolling an electrode mixture into a sheet shape, and this sheet is bonded to a core to manufacture an electrode. Patent Literature 1 discloses an electrode film (or electrode mixture) produced by mixing an active material, a particulate binder, and a conductive material using a mill, and then processing this mixture for a long period of time by applying a large shear force under a high pressure so that the binder becomes fibrillated.

### CITATION LIST

### PATENT LITERATURE

PATENT LITERATURE 1: Japanese Unexamined Patent Application Publication No. 2019-512872

### SUMMARY

In the manufacture of an electrode by a dry process that does not use a solvent, matters such as the degree of binder fibrillation and the mixing state of the materials constituting the electrode mixture significantly influence the formability and the breaking strength of the electrode mixture sheet. As a result of studies by the present inventors, it has been ascertained that, as disclosed in Patent Literature 1, when an electrode mixture is processed by applying a large shear force for a long period of time, the formability of the electrode mixture sheet deteriorates, and its breaking strength becomes greatly reduced.

A PTFE powder according to one aspect of the present disclosure is in a dry state, and is such that the percentage of fibrous particles having an aspect ratio of 1.5 or higher relative to all particles is 20 % to 60 %, and the average major axis size of the fibrous particles is 1 µm to 20 µm.

A PTFE powder according to another aspect of the present disclosure is in a dry state, and is such that the percentage of fibrous particles having an aspect ratio of 5 or higher relative to all particles is 60 % or higher, and the average minor axis size of the fibrous particles is 1 µm to 20 µm.

An electrode manufacturing method according to an aspect of the present disclosure includes: a mixing step of mixing the above-described PTFE powder, an active material, and a conductive material and thereby producing an electrode mixture having a solids concentration of substantially 100 %; a rolling step of rolling and forming the electrode mixture into a sheet shape and thereby producing an electrode mixture sheet; and a bonding step of bonding the electrode mixture sheet to a core and thereby producing an electrode.

An electrode according to one aspect of the present disclosure is such that: an electrode mixture containing the above-described PTFE powder, an active material, and a conductive material is laminated on a surface of a core; coverage of the conductive material on the surface of the active material is 10 % to 60 %; and when the electrode mixture is divided into three equal parts in the thickness direction so that a first region, a second region, and a third region are formed sequentially from the core side, the PTFE powder content (a) in the first region, the PTFE powder content (b) in the second region, and the PTFE powder content (c) in the third region satisfy (c-a)/(a+b+c) <_ ±10 %.

According to one aspect of the present disclosure, an electrode mixture sheet having excellent formability and a high breaking strength can be produced. Further, since the active material contained in the electrode mixture sheet according to the present disclosure has a high conductive material coverage, use of the electrode mixture sheet can improve the battery characteristics of the electrode.

### BRIEF DESCRIPTION OF DRAWINGS

FIG. 1 is a cross-sectional view of an electrode according to an example embodiment.
FIG. 2 is a diagram in which, regarding an electrode manufacturing process according to an example embodiment, (a) shows a mixing step and (b) shows a rolling step.
FIG. 3 is a diagram showing a bonding step in an electrode manufacturing process according to an example embodiment.

### DESCRIPTION OF EMBODIMENTS

Embodiments of an electrode manufacturing method and an electrode mixture according to the present disclosure will now be described in detail. The embodiments described below are examples only, and the present disclosure is not limited to the embodiments below. Further, the drawings referred to in the description of the embodiments are illustrated schematically, and dimensional ratios and the like of constituent elements shown in the drawings should be determined by considering the following description.

### [PTFE (Polytetrafluoroethylene) Powder]

A PTFE powder is contained in an electrode mixture as a binder, and can also be referred to as a PTFE powder for battery use. The PTFE powder may be for positive electrode use. The PTFE powder is a dry powder, and is not a powder dispersed in an aqueous or other dispersions. Using this PTFE powder, an electrode mixture can be produced by a dry method described later.

In an example embodiment, the PTFE powder contains fibrous particles having an aspect ratio of 1.5 or higher at a percentage of 20 % to 60 % relative to all particles. Further, the average major axis size of these fibrous particles is 1 µm to 20 µm (hereinafter, fibrous particles having the above-described shape are referred to as fibrous particles A). By using this PTFE powder, an electrode mixture sheet having good formability and a high breaking strength can be produced. The percentage of the fibrous particles A relative to all particles can be calculated as follows. The percentage of later-described fibrous particles B relative to all particles can also be measured in a similar manner.
(1) An image of the PTFE powder containing the fibrous particles A is captured with a scanning electron microscope (SEM). The image capturing magnification can be, for example, 300 to 1000 times.
(2) The captured image is loaded into a computer, and using an image analysis software such as ImageJ, all particles are sorted into the fibrous particles A and particles having an aspect ratio of less than 1.5.
(3) The number of the fibrous particles A is divided by the number of all particles, namely, the total number of the fibrous particles A and the particles having an aspect ratio of less than 1.5, and the percentage of the fibrous particles A relative to all particles is thereby calculated.

The average major axis size of the fibrous particles A can be calculated by analyzing an SEM image using an image analysis software as in the above-described calculation of the percentage of the fibrous particles A relative to all particles, measuring the major axis size (or major axis length) of 100 fibrous particles having an aspect ratio of 1.5 or higher, and averaging the measured values. The average minor axis size of the fibrous particles B described later can also be measured by a similar method.

The average aspect ratio of the fibrous particles A may be 2 to 20. The average aspect ratio of the fibrous particles A can be calculated by analyzing an SEM image using an image analysis software as in the above-described calculation of the average major axis size, measuring the aspect ratio (i.e., major axis / minor axis) of 100 fibrous particles having an aspect ratio of 1.5 or higher, and averaging the measured values. The average aspect ratio of the fibrous particles B described later can also be measured by a similar method.

The PTFE powder containing the fibrous particles A can be produced by fibrillating, using a dry pulverizer such as a jet mill pulverizer, a PTFE raw material (or PTFE particles) that falls under the category of fine powders that can be fibrillated (or fiberized). The PTFE raw material may be secondary particles. The average particle size of the PTFE raw material is, for example, 100 µm to 700 µm, preferably 100 µm to 500 µm, and more preferably 100 µm to 400 µm. The average particle size of the PTFE raw material can be determined by observing the PTFE raw material particles with an SEM. More specifically, after identifying the outer shapes of 100 randomly selected particles, the major diameters (or longest diameters) of the respective 100 particles are determined, and an average value thereof is used as the average particle diameter of the PTFE raw material. When producing the PTFE powder containing the fibrous particles A using a jet mill pulverizer, the percentage of the fibrous particles A relative to all particles can be adjusted to 20 % to 60 % by appropriately adjusting the feed rate of the PTFE raw material, the pulverization pressure, and the like.

In another example embodiment, the PTFE powder contains fibrous particles having an aspect ratio of 5 or higher at a percentage of 60 % or higher relative to all particles. The PTFE powder preferably contains fibrous particles having an aspect ratio of 5 or higher at a percentage of 80 % or higher relative to all particles. Further, the average minor axis size of these fibrous particles is 1 µm to 20 µm (hereinafter, fibrous particles having the above-described shape are referred to as fibrous particles B). By using this PTFE powder, an electrode mixture sheet having good formability and a high breaking strength can be produced.

The PTFE powder containing the fibrous particles B can be produced by fibrillating, using a dry pulverizer such as an airflow type pulverizer, a PTFE raw material (or PTFE particles) that falls under the category of fine powders that can be fibrillated (or fiberized). As the PTFE raw material, it is possible to use the same material as that used in producing the above-described PTFE powder containing the fibrous particles A. When producing the PTFE powder containing the fibrous particles B using an airflow type pulverizer, the percentage of the fibrous particles B relative to all particles can be adjusted to 60 % or higher by appropriately adjusting the feed rate of the PTFE raw material, the rotation speed of the blades, the gaps between the blades, and the like.

The median diameter of the PTFE powder containing the fibrous particles A and/or B is preferably 2 µm to 20 µm. The median diameter can be measured using a particle size distribution analyzer. The median diameter of the PTFE powder containing the fibrous particles A and/or B being 2 µm to 20 µm means that the PTFE powder containing the fibrous particles A and/or B has a size obtained by pulverizing the PTFE particles of the PTFE raw material.

### [Electrode]

An electrode according to the present disclosure is suitable for non-aqueous electrolyte secondary batteries such as lithium ion batteries, but can also be employed for batteries containing an aqueous electrolyte, or for power storage devices such as capacitors. In the following, description is given by referring to, as an example, an electrode for a non-aqueous electrolyte secondary battery (in particular, a case where the electrode is being employed as a positive electrode).

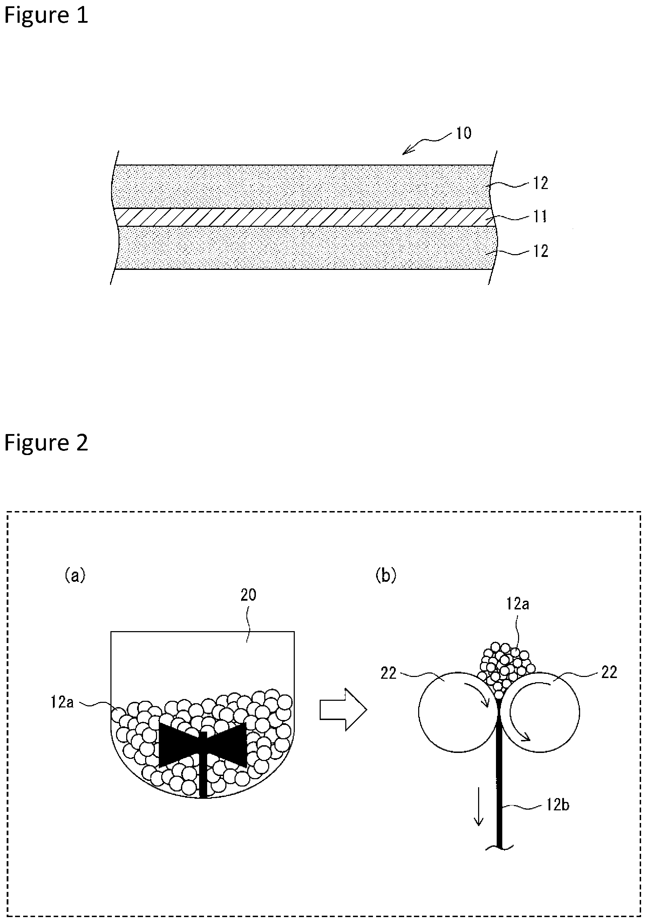

FIG. 1 is a cross-sectional view of an electrode according to an example embodiment. The electrode 10 comprises a core 11 and an electrode mixture 12 provided on a surface of the core 11. As shown in FIG. 1, the electrode 10 may include the electrode mixture 12 on both sides of the core 11. The electrode 10 may be an elongate electrode for constituting a spiral-type electrode assembly, or may be a rectangular electrode for constituting a laminate-type electrode assembly. The electrode 10 can be employed as a positive electrode, a negative electrode, or both electrodes of a non-aqueous electrolyte secondary battery.

As the core 11, a metal foil, a film having a metal layer formed on its surface, or the like can be used. The thickness of the core 11 is, for example, 5 µm to 20 µm. In the case of a positive electrode, a metal foil containing aluminum as the main component can be used as the core 11. In the case of a negative electrode, a metal foil containing copper as the main component can be used. As used in the present specification, the main component means the constituent having the highest mass ratio. The core 11 may be an aluminum foil that is substantially 100 % aluminum, or may be a copper foil that is substantially 100 % copper.

The electrode mixture 12 contains the PTFE powder, an active material, and a conductive material. The thickness of the electrode mixture 12 is, for example, 30 µm to 120 µm, and preferably 50 µm to 100 µm. In addition to the PTFE powder, the electrode mixture 12 may contain a binder such as non-fibrillating polyvinylidene fluoride (PVdF). The electrode mixture 12 is constituted containing the active material as the main component. The active material content is preferably 85 % by mass to 99 % by mass, and more preferably 90 % by mass to 99 % by mass, relative to the mass of the electrode mixture 12.

As the active material for positive electrode (or positive electrode active material), a lithium transition metal composite oxide is generally used. Examples of metal elements contained in the lithium transition metal composite oxide include Ni, Co, Mn, Al, B, Mg, Ti, V, Cr, Fe, Cu, Zn, Ga, Sr, Zr, Nb, In, Sn, Ta, and W. Among these, at least one of Ni, Co, and Mn is preferably contained. As the active material for negative electrode (or negative electrode active material), a carbon-based active material, for example, is used, which may be natural graphite such as flake graphite, massive graphite, and earthy graphite, or artificial graphite such as massive artificial graphite (MAG) and graphitized mesophase carbon microbeads (MCMB). Further, as the negative electrode active material, a Si-based active material or the like that forms an alloy with lithium may be used.

Examples of the conductive material contained in the electrode mixture 12 include carbon materials such as carbon black (CB), acetylene black (AB), Ketjen black, and graphite. The content of the conductive material is, for example, 0.5 % by mass to 5.0 % by mass relative to the mass of the electrode mixture 12.

Coverage of the conductive material on the surface of the active material is preferably 10 % to 60 %, and more preferably 20 % to 60 %. Since the coverage of the conductive material is sufficiently high, the battery characteristics of the electrode can be improved. As will be described later, by using a relatively short period of time for the process of mixing the PTFE powder, the active material, and the conductive material, the coverage of the conductive material can be increased.

The content of the PTFE powder is, for example, 0.5 % by mass to 5.0 % by mass relative to the mass of the electrode mixture 12. The PTFE powder is adhered to the surface of the active material particles, and is twined around the active material. In other words, the positive electrode active material is retained by the PTFE powder which is present in a mesh-like state. When the PTFE powder contains the fibrous particles A and/or fibrous particles B in the predetermined amount, an electrode mixture sheet having good formability and a high breaking strength can be produced.

When the electrode mixture 12 is divided into three equal parts in the thickness direction so that a first region, a second region, and a third region are formed sequentially from the core 11 side, the PTFE powder content (a) in the first region, the PTFE powder content (b) in the second region, and the PTFE powder content (c) in the third region satisfy (c-a)/(a+b+c) <_ ±10 %, and preferably satisfy (c-a)/(a+b+c) < ±5 %. That is, by configuring such that the difference between the PTFE powder content (a) in the first region near the surface and the PTFE powder content (c) in the third region near the core 11 is within the range of ±10 % and preferably within the range of ±5 % relative to the total PTFE powder content (a+b+c), the PTFE powder can be present substantially uniformly in the entire electrode mixture 12 without being unevenly densely distributed in a part thereof.

The breaking peripheral speed ratio of the electrode mixture 12 is preferably equal to 8 or higher. The breaking peripheral speed ratio of the electrode mixture 12 is the breaking peripheral speed ratio at the time of forming a test sheet for measuring the breaking peripheral speed ratio. The breaking peripheral speed ratio can be measured by varying the peripheral speed ratio of a pair of forming rolls at the time of forming a test sheet from the electrode mixture particles, and identifying the peripheral speed ratio at which the sheet breaks. The statement "the breaking peripheral speed ratio of the electrode mixture 12 is preferably equal to 8 or higher" means that "the breaking peripheral speed ratio at the time of forming a test sheet for measuring the breaking peripheral speed ratio is preferably equal to 8 or higher". When the breaking peripheral speed ratio of the electrode mixture 12 is equal to 8 or higher, it can be judged that fibrillation of the PTFE powder contained in the electrode mixture 12 has been performed appropriately. The electrode mixture 12 satisfying this condition has excellent formability, and from the electrode mixture 12 satisfying this condition, an electrode mixture 12 having a high breaking strength can be produced. The breaking peripheral speed ratio is more preferably 9 or higher, and further preferably 10 or higher.

A method for measuring the breaking peripheral speed ratio of the electrode mixture 12 is as described below. The breaking peripheral speed ratio can be measured using a device similar to a device shown in FIG. 2(b) for rolling electrode mixture particles 12a to form a sheet-shaped electrode mixture sheet 12b. As shown in FIG. 2(b), two rolls are used to roll the electrode mixture particles 12a and form the electrode mixture 12 into a sheet shape. When forming the electrode mixture into a sheet shape, the two constant pressure rolls are set to have a linear pressure of approximately 0.03 t/cm and a gap of 0 µm. The peripheral speed of a first roll is fixed at 5 m/min, and the electrode mixture is formed into a sheet shape while changing the peripheral speed ratio from 1 to 10 in increments of 1. The smallest peripheral speed ratio among the peripheral speed ratios at which a breakage was observed in the sheet is determined as the breaking peripheral speed ratio. Here, the electrode mixture sheet obtained during the measurement of the breaking peripheral speed ratio of the electrode mixture corresponds to the above-mentioned test sheet. In the present specification, the term "test sheet" can be replaced with "electrode mixture sheet".

A peripheral speed ratio is a value of the peripheral speed of the other roll expressed as a ratio based on the assumption that the peripheral speed of the first roll is 1. The breaking peripheral speed ratio is the peripheral speed ratio at the time of breakage of the test sheet, and is a value of the peripheral speed of the other roll at the time of occurrence of a breakage of the test sheet, which is expressed based on the assumption that the peripheral speed of the first roll is 1. When the peripheral speed ratio of the two rolls is higher, the shear force in the lateral direction becomes greater, and the test sheet is more easily broken. Accordingly, it can be assessed that when the value of the peripheral speed ratio at the time of breakage is higher, the breaking strength of the sheet is higher.

The electrode mixture 12 is preferably a mixture in which the active material, the PTFE powder, and the conductive material are uniformly dispersed, and the breaking peripheral speed ratio of the electrode mixture 12 serves as an index indicating dispersibility of the constituent materials. Further, in the electrode mixture 12, it is preferable that the amount of cracking of the active material particles is small, and that much of the conductive material is adhered to the surface of the active material particles so that conductive paths are formed between the particles. In other words, it is necessary to produce the electrode mixture 12 in such a manner that particle cracking of the active material is suppressed and the amount of the conductive material adhered to the surface of the active material particles is prevented from being reduced due to incorporation of the conductive material into the PTFE powder. According to the manufacturing method described below, it is possible to produce a high-quality electrode mixture 12 that satisfies such conditions.

### [Electrode Manufacturing Method]

A method for manufacturing the electrode 10 will now be described in further detail. Although a method for manufacturing a positive electrode will be described below by way of example, this manufacturing method can be similarly applied to the manufacture of a negative electrode. In the case of a negative electrode, a negative electrode active material is used instead of a positive electrode active material. Further, a conductive material may be not added.

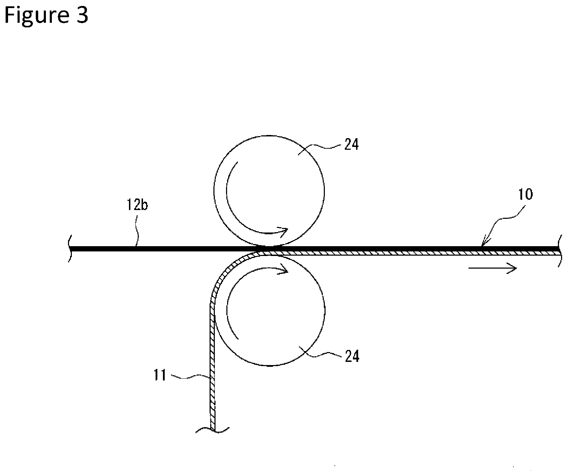

FIGs. 2 and 3 are diagrams schematically showing a process of manufacture of the electrode 10 according to an example embodiment. The electrode 10 manufacturing method includes a mixing step shown in FIG. 2(a), a rolling step shown in FIG. 2(b), and a bonding step shown in FIG. 3. In the mixing step, the PTFE powder, the active material, and the conductive material are mixed to produce electrode mixture particles 12a having a solids concentration of substantially 100 %. In the rolling step, the electrode mixture particles 12a are rolled and formed into a sheet shape to produce an electrode mixture sheet. In the bonding step, the electrode mixture sheet is bonded to a core to produce an electrode.

The electrode 10 manufacturing method is a dry process in which the electrode 10 is manufactured using an electrode mixture 12 having a solids concentration of substantially 100 %. A dry process is a process in which the active material particles and the binder particles are mixed without using a solvent, that is, the mixing is performed in a state in which the active material and the binder have a solids concentration of substantially 100 %. The electrode 10 manufacturing method according to the present disclosure does not require use of a solvent as required in a conventional electrode 10 manufacturing method. The fact that use of a solvent is not required not only means that a solvent is unnecessary as a raw material, but also means that a solvent drying process is unnecessary, and that a need for an exhaust facility and the like related to the drying process can also be eliminated.

In the mixing step, raw materials such as the PTFE powder, the active material, and the conductive material are mixed in a mixer 20 to produce electrode mixture particles 12a. In the mixing step, by performing a short mixing process using the PTFE powder containing the fibrous particles A and/or fibrous particles B in the predetermined amount, dispersibility of the constituent materials can be enhanced while also increasing the coverage of the conductive material on the surface of the active material, and formability and breaking strength of the electrode mixture 12 can be improved. As the breaking peripheral speed ratio of the electrode mixture 12, 8 or higher is preferably achieved. The breaking peripheral speed ratio of the electrode mixture 12 serves as an index indicating the dispersibility of the constituent materials and hence the formability and the breaking strength of the electrode mixture 12. Here, if a long mixing process is performed, the conductive material would be incorporated into the binder, and the coverage of the conductive material on the surface of the active material would become less than 10 %. By using the PTFE powder containing the fibrous particles A and/or fibrous particles B in the predetermined amount, even a short mixing process enables to increase the dispersibility of the constituent materials, so that cracking of the active material during the mixing process can be suppressed. Here, it is noted that the active material contained in the electrode may include particles cracked in the mixing process and particles cracked in the rolling step described later.

In the mixing step, before the active material and the conductive material are put into the mixer 20, the conductive material may be adhered to the surface of the active material in advance by a mechanofusion process or the like. By adhering the conductive material to the surface of the active material in advance, the duration of the mixing process in the mixer 40 can be set to a short period of time by which a state in which the raw materials other than the conductive material are dispersed is achieved. A mechanofusion process is a dry process carried out in a mechanofusion reactor comprising a cylindrical chamber which has therein compression tools and blades and which is rotated at a high speed. The rotation speed is typically higher than 1000 rpm. By placing the conductive material and the active material in the chamber and rotating the chamber, the particles are pressed against each other and against the chamber wall. By using the compression tools and also generating a centrifugal force by high-speed rotation, adhesive bonding between the conductive material and the active material is promoted. Examples of the mechanofusion reactor include "Nobilta" (registered trademark) pulverizer or "Mechano Fusion" (registered trademark) pulverizer manufactured by Hosokawa Micron Corporation (Japan), "Hybridizer" (trademark) pulverizer manufactured by Nara Machinery Co., Ltd., "Balance Gran" manufactured by Freund-Turbo Corporation, "COMPOSI" manufactured by Nippon Coke & Engineering, Co., Ltd., and the like.

As the mixer 40, for example, a conventionally known mechanical stirring mixer can be used. Specific examples of suitable mixers 40 include: a cutter mill, a pin mill, a bead mill, a particle compounding device (i.e., a device in which a shear force is generated inside a tank between a specially-shaped rotor that is rotated at a high speed and a collision plate), and a granulator, which are devices that can apply mechanical shear force; and kneaders such as a twin-screw extrusion kneader and a planetary mixer. A cutter mill, a particle compounding device, a granulator, and a twin-screw extrusion kneader are preferred. With such a device, the PTFE powder can be further fibrillated while mixing the raw materials. The processing time of the mixing step (i.e., the time during which shear force is applied to the materials) is preferably within several minutes, and can be, for example, 0.5 minutes to 4 minutes. Since the PTFE powder already contains the fibrillated fibrous particles A and/or fibrous particles B in the predetermined amount, so long as the processing time is 0.5 minutes or longer, the PTFE powder can be adhered to the surface of the active material particles and twined around the active material. If the processing time is too long, the amount of the conductive material that becomes incorporated into the PTFE powder increases. In that case, the battery characteristics are adversely affected, which may involve, for example, a large reduction in electrical conductivity and an increase in resistance of the electrode mixture sheet. Further, since PTFE fibrillation progresses as the processing time increases, excessive fibrillation results in reducing the breaking strength of the sheet.

As shown in FIG. 2(b), in the rolling step, the electrode mixture particles 12a are rolled and formed into a sheet shape using two rolls 22. The two rolls 22 are arranged with a predetermined gap provided therebetween, and are rotated in the same direction. The electrode mixture particles 12 a are supplied to the gap between the two rolls 22 so as to be compressed and stretched into a sheet shape by the two rolls 22. The two rolls 22 have, for example, the same roll diameter. The obtained electrode mixture sheet 12b may be passed through the gap between the two rolls 22 a plurality of times, and may be stretched one or more times using other rolls having different roll diameters, peripheral speeds, gaps, and the like. Further, the rolls may be heated to hot-press the electrode mixture particles 12a.

The thickness of the electrode mixture sheet 12b can be controlled by, for example, the gap between the two rolls 22, the peripheral speed, the number of stretching processes, and the like. In the rolling step, it is preferable to form the electrode mixture particles 12a into a sheet shape using two rolls 22 whose peripheral speed ratios differ by two times or more. By setting the peripheral speed ratios of the two rolls 22 to be different, for example, reduction of thickness of the electrode mixture sheet 12b is facilitated and productivity is increased. The peripheral speed ratio of the two rolls 22 is more preferably 2.5 times or more, and may be 3 times or more. When the peripheral speed ratio is increased, the shear force acting on the electrode mixture sheet 12b becomes greater, so that the electrode mixture sheet 12b is required to have a high breaking strength.

Next, as shown in FIG. 3, in the bonding step, by bonding the electrode mixture sheet 12b to the core 11, an electrode 10 in which a mixture layer composed of the electrode mixture 12 is provided on a surface of the core 11 is obtained. While FIG. 3 shows a state in which the electrode mixture 12 is joined to only one surface of the core 11, the electrode mixture 12 is preferably joined to both surfaces of the core 11. Two electrode mixture 12 sheets may be joined to both surfaces of the core 11 at the same time, or alternatively, it may be such that one sheet is joined to one surface of the core 11 and then the other sheet is joined to the other surface.

In the bonding step, the electrode mixture sheet 12b is bonded to the surface of the core 11 using two rolls 24. For example, the two rolls 24 have the same roll diameter, are arranged with a predetermined gap provided therebetween, and are rotated in the same direction at the same peripheral speed. Preferably, the two rolls 24 are heated to a predetermined temperature and serve to apply a predetermined pressure.

### EXAMPLES

While the present disclosure will be further described using Examples, the present disclosure is not limited to these Examples.

### <Example 1-1>

### [Production of PTFE Powder]

A PTFE raw material (or PTFE particles) having an average particle size of 343 µm was pulverized using a jet mill pulverizer under the conditions of a feed rate of 3 kg/h and a pulverization pressure of 0.6 MPa, and a PTFE powder was obtained. The median diameter of the entire PTFE powder obtained was 15.4 µm.

### [Process of Attaching Conductive Material to Positive Electrode Active Material Surface]

Using NOB300? Nobilta (registered trademark) manufactured by Hosokawa Micron Corporation, 1000 g of lithium transition metal composite oxide and 10 g of acetylene black (AB) were mixed in a Nobilta pulverizer for 5 minutes, and a carbon-adhered positive electrode active material was produced.

### [Production of Positive Electrode Mixture Particles]

The above carbon-adhered positive electrode active material and the PTFE powder were put into a mixer (Wonder Crusher manufactured by Osaka Chemical Co., Ltd.) at a mass ratio of 101:4, and were subjected to a mixing process at room temperature for 2 minutes at a rotation speed of level 5. Here, it is noted that, regarding the rotation speed of Wonder Crusher, level 10 is 28000 rpm, which is the maximum. Through this mixing process, positive electrode mixture particles in which the positive electrode active material, the PTFE powder, and AB were uniformly dispersed were obtained. The obtained positive electrode mixture had a solids concentration of 100 %.

### [Production of Positive Electrode Mixture Sheet]

The obtained positive electrode mixture particles were passed between two rolls and were rolled, and a positive electrode mixture sheet was produced. The peripheral speed ratio of the two rolls was set to 1:3, and the thickness of the positive electrode mixture sheet was adjusted to approximately 100 µm.

Regarding the obtained positive electrode mixture particles and positive electrode mixture sheet, breaking strength and the sheet's film formability (appearance) were evaluated by the methods described below. The evaluation results are shown in Table 1 together with the state of the PTFE powder.

### [Evaluation of Breaking Strength]

Apart from the production of the above positive electrode mixture sheet, a test sheet was formed to measure the breaking peripheral speed ratio and evaluate the breaking strength. Regarding the test sheet formation, when forming the positive electrode mixture particles into a sheet shape as shown in FIG. 2(b), two constant pressure rolls were set to have a linear pressure of approximately 0.03 t/cm and a gap of 0 µm. The peripheral speed of one roll was fixed at 5 m/min, and the sheet formation was carried out while changing the peripheral speed ratio from 1 to 10 in increments of 1. The smallest peripheral speed ratio among the peripheral speed ratios at which a breakage occurred in the sheet was determined as the breaking peripheral speed ratio, and the breaking strength of the sheet was thereby evaluated. Measurement of the breaking peripheral speed ratio was performed a plurality of times, and an average peripheral speed ratio calculated from the smallest peripheral speed ratios at the time a breakage occurred in the sheet in the respective measurements was used as the breaking peripheral speed ratio.

### [Evaluation of Film Formability]

The positive electrode mixture sheet obtained by the production of the positive electrode mixture sheet was visually observed to evaluate film formability based on two evaluation points, namely, the presence or absence of white streaks caused by poor dispersibility of the PTFE powder, and the sheet condition at end portions. Regarding the presence or absence of white streaks, it was determined "OK" when almost no white streaks were observed and the PTFE powder was uniformly dispersed, and it was determined "Not OK" when many white streaks were present and non-uniform distribution of the PTFE powder was much observed. A case where "many white streaks were present and non-uniform distribution of fibrous PTFE was much observed" indicates that PTFE fibrillation was insufficient and that white streaks were observed due to the presence of large PTFE particles. Regarding the sheet condition at end portions, it was determined "OK" when, at both end portions in the direction perpendicular to the stretching direction of the positive electrode mixture sheet, the sheet was formed having the same condition as that at the central portion, and it was determined "Not OK" when the end portions were powdery and the sheet was not sufficiently formed. A case where "the end portions were powdery and the sheet was not sufficiently formed" indicates that at the end portions where the pressure during rolling is smaller than that at the central portion, compression was insufficient and the sheet became powdery due to insufficient formation. The evaluation results regarding the presence or absence of white streaks and the sheet condition at end portions are shown in Table 1 in the fields of "white streaks" and "end portions".

### <Example 1-2>

Positive electrode mixture particles and a positive electrode mixture sheet were produced and evaluated in the same manner as in Example 1 except that, in the production of the PTFE powder, an airflow type pulverizer was used instead of the jet mill pulverizer, and pulverization was performed in a continuous process under the conditions of a feed rate of 20 kg/h, a rotation speed of 8000 rpm, and a gap of 2 mm. The median diameter of the entire PTFE powder obtained was 9.3 µm.

### <Comparative Example 1-1>

Positive electrode mixture particles and a positive electrode mixture sheet were produced and evaluated in the same manner as in Example 1 except that the production of the PTFE powder was not carried out, and the positive electrode mixture particles were produced using an unprocessed PTFE raw material.

### <Comparative Example 1-2>

Positive electrode mixture particles and a positive electrode mixture sheet were produced and evaluated in the same manner as in Example 1 except that, in the production of the PTFE powder, an airflow type pulverizer was used instead of the jet mill pulverizer, and pulverization was performed in a continuous process under the conditions of a feed rate of 10 kg/h, a rotation speed of 5000 rpm, and a gap of 5 mm.

### <Comparative Example 1-3>

Positive electrode mixture particles and a positive electrode mixture sheet were produced and evaluated in the same manner as in Example 1 except that, in the production of the PTFE powder, a dry bead mill was used instead of the jet mill pulverizer, and pulverization was performed in a continuous process under the conditions of a flow rate of 0.4 L/min, a peripheral speed of 14 m/s, and a bead diameter φ of 1.0 mm.

### <Comparative Example 1-4>

Positive electrode mixture particles and a positive electrode mixture sheet were produced and evaluated in the same manner as in Example 1 except that, in the production of the PTFE powder, a wet bead mill was used instead of the jet mill pulverizer, and a pulverization process was performed in a batch process for 60 minutes using ethanol as the solvent and using ZrO₂ beads of φ 2.0 mm.

**[Table 1]**

| | State of PTFE Powder | Evaluation Results | | |
|---|---|---|---|---|
| | | Breaking Peripheral Speed Ratio | Film Formability | |
| | | | White Streaks | End Portions |
| Example 1-1 | Percentage of fibrous particles having aspect ratio of 1.5 or higher: 33 % | 9 | OK | OK |
| | Average major axis size of fibrous particles: 8.3 µm | | | |
| | Average aspect ratio of fibrous particles: 11.3 | | | |
| Example 1-2 | Percentage of fibrous particles having aspect ratio of 5 or higher: 95 % | 10 | OK | OK |
| | Average minor axis size of fibrous particles: 4.6 µm | | | |
| Comparative Example 1-1 | Unprocessed | 4 | Not OK | Not OK |
| Comparative Example 1-2 | Percentage of fibrous particles having aspect ratio of 5 or higher: 64 % | 4 | OK | Not OK |
| | Average minor axis size of fibrous particles: 10.7 µm | | | |
| Comparative Example 1-3 | Percentage of fibrous particles having aspect ratio of 5 or higher: 81 % | 2 | OK | Not OK |
| | Average minor axis size of fibrous particles: 88.2 µm | | | |
| Comparative Example 1-4 | Flaky particles | 2 | Not OK | Not OK |
| | Average particle size: 176 µm | | | |

From the evaluation results shown in Table 1, it can be seen that, as compared to the positive electrode mixture sheets of the Comparative Examples, both positive electrode mixture sheets of the Examples have good film formability (appearance) and a high breaking strength.

### <Example 2-1>

### [Production of Positive Electrode]

The positive electrode mixture sheet produced in Example 1-1 was placed on a surface of a positive electrode core. Using two rolls, a laminate of the positive electrode mixture sheet and the positive electrode core was pressed (at a linear pressure of 1.0 t/cm), and a positive electrode was obtained. An aluminum alloy foil was used as the core.

### <Example 2-2>

A positive electrode was produced in the same manner as in Example 2-1 except that, in the production of the positive electrode mixture particles, the PTFE powder obtained in Example 1-2 was used instead of the PTFE powder obtained in Example 1-1.

### <Example 2-3>

A positive electrode was produced in the same manner as in Example 2-2 except that, in the production of the positive electrode mixture particles, the rotation speed of the mixer was changed to level 3.

### <Example 2-4>

A positive electrode was produced in the same manner as in Example 2-2 except that, in the production of the positive electrode mixture particles, the rotation speed of the mixer was changed to level 1.

### <Example 2-5>

A positive electrode was produced in the same manner as in Example 2-2 except that, in the production of the positive electrode mixture particles, the rotation speed of the mixer was changed to level 1, and the mixing time was changed to 1 minute.

### <Comparative Example 2-1>

A positive electrode was produced in the same manner as in Example 2-1 except that, in the production of the positive electrode mixture particles, the PTFE powder obtained in Comparative Example 1-1 was used instead of the PTFE powder obtained in Example 1-1, and the mixing time was changed to 5 minutes.

Regarding the positive electrodes obtained in the Examples and the Comparative Examples, the binder contents in the first region, the second region, and the third region of the positive electrode mixture and the AB coverage on the surface of the active material were evaluated. The evaluation results are shown in Table 2 together with the production conditions of the positive electrode mixture particles.

**[Table 2]**

| | PTFE Powder Used | Mixing Rotation Speed | Mixing Time (min) | Binder Content in 1st Region (%) | Binder Content in 2nd Region (%) | Binder Content in 3rd Region (%) | Conductive Material Coverage (%) |
|---|---|---|---|---|---|---|---|
| Example 2-1 | Example 1-1 | Level 5 | 2 | 34 | 35 | 31 | 17.5 |
| Example 2-2 | Example 1-2 | Level 5 | 2 | 33 | 35 | 32 | 18.7 |
| Example 2-3 | Example 1-2 | Level 3 | 2 | 34 | 35 | 31 | 26.3 |
| Example 2-4 | Example 1-2 | Level 1 | 2 | 33 | 34 | 33 | 36.5 |
| Example 2-5 | Example 1-2 | Level 1 | 1 | 29 | 37 | 34 | 51.5 |
| Comparative Example 2-1 | Comparative Example 1-1 | Level 5 | 5 | 32 | 35 | 33 | 4.0 |

From the evaluation results shown in Table 2, it can be seen that all positive electrodes of the Examples had a conductive material coverage of 10 % to 60 % on the surface of the active material, and that the PTFE powder content (a) in the first region, the PTFE powder content (b) in the second region, and the PTFE powder content (c) in the third region satisfied (c-a)/(a+b+c) <_ ±10 %. In contrast, in the positive electrode of the Comparative Example, the conductive material coverage on the surface of the active material was less than 10 %. Accordingly, it is presumed that in the positive electrodes of the Examples, due to the high coverage of the conductive material on the positive electrode active material, the battery characteristics of the electrode can be improved as compared to in the positive electrode of the Comparative Example.

In Example 2-5, the positive electrode was produced using a low mixing rotation speed and a short mixing time as compared to in the other Examples. It can be seen that the use of a low mixing rotation speed and a short mixing time allows to achieve a high conductive material coverage. On the other hand, from the binder contents in the first, second, and third regions, it is noted that an excessively short mixing time may affect the dispersibility of the mixture particles.

### REFERENCE SIGNS LIST

- 10: electrode
- 11: core
- 12: electrode mixture
- 12a: electrode mixture particles
- 12b: electrode mixture sheet
- 20: mixer
- 22, 24: roll

## Claims

1. A PTFE powder in a dry state, containing
fibrous particles having an aspect ratio of 1.5 or higher at a percentage of 20 % to 60 % relative to all particles, wherein
an average major axis size of the fibrous particles is 1 µm to 20 µm.

2. The PTFE powder according to claim 1, wherein an average aspect ratio of the fibrous particles is 2 to 20.

3. The PTFE powder according to claim 1 or 2, wherein a median diameter is 2 µm to 20 µm.

4. The PTFE powder according to any one of claims 1 to 3, wherein the PTFE powder is a binder for a positive electrode of a non-aqueous electrolyte secondary battery.

5. A PTFE powder in a dry state, containing
fibrous particles having an aspect ratio of 5 or higher at a percentage of 60 % or higher relative to all particles, wherein
an average minor axis size of the fibrous particles is 1 µm to 20 µm.

6. The PTFE powder according to claim 5, wherein a median diameter is 2 µm to 20 µm.

7. The PTFE powder according to claim 5 or 6, wherein the PTFE powder is a binder for a positive electrode of a non-aqueous electrolyte secondary battery.

8. An electrode manufacturing method, including:
a mixing step of mixing the PTFE powder according to any one of claims 1 to 7, an active material, and a conductive material and thereby producing electrode mixture particles having a solids concentration of substantially 100 %;
a rolling step of rolling and forming the electrode mixture particles into a sheet shape and thereby producing an electrode mixture sheet; and
a bonding step of bonding the electrode mixture sheet to a core and thereby producing an electrode.

9. The electrode manufacturing method according to claim 8, wherein
in the rolling step, the electrode mixture particles are formed into a sheet shape using two rolls having peripheral speed ratios that differ by two times or more.

10. An electrode, wherein
an electrode mixture containing the PTFE powder according to any one of claims 1 to 7, an active material, and a conductive material is laminated on a surface of a core;
coverage of the conductive material on a surface of the active material is 10 % to 60 %; and
when the electrode mixture is divided into three equal parts in a thickness direction so that a first region, a second region, and a third region are formed sequentially from a side toward the core, a content (a) of the PTFE powder in the first region, a content (b) of the PTFE powder in the second region, and a content (c) of the PTFE powder in the third region satisfy (c-a)/(a+b+c) <_ ±10 %.
